(19) **Europäisches Patentamt**
**European Patent Office**
**Office européen des brevets**

(11) **EP 1 986 130 A1**

(12) **EUROPEAN PATENT APPLICATION**

(43) Date of publication:
**29.10.2008 Bulletin 2008/44**

(51) Int Cl.:
*G06K 9/46* (2006.01)    *G06T 5/00* (2006.01)

(21) Application number: **08155070.9**

(22) Date of filing: **24.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.04.2007 JP 2007114305**

(71) Applicant: **Sony Corporation**
**Tokyo 108-0075 (JP)**

(72) Inventors:
• **Kondo, Tetsujiro**
**Tokyo 108-0075 (JP)**
• **Yamamoto, Sakon**
**Tokyo 108-0075 (JP)**

(74) Representative: **Körber, Martin Hans**
**Mitscherlich & Partner**
**Sonnenstrasse 33**
**80331 München (DE)**

(54) **Apparatus and method of determining similar image**

(57) An apparatus of determining a similar image contains a subject-region-detecting unit that detects a subject region from a received image, a pixel-value-distribution-generating unit that generates pixel value distribution of pixels included in the subject region detected by the subject-region-detecting unit, and a determination unit that determines whether or not an image relative to the subject region is similar to a previously registered subject image based on the pixel value distribution generated by the pixel value distribution generating unit and a registered pixel value distribution of the previously registered subject image.

## F I G. 1

SDin → 11(11a, 11b) SUBJECT-REGION -DETECTING UNIT → SE → 12 PIXEL-VALUE- DISTRIBUTION- GENERATING UNIT → JA → 13 DETERMINATION UNIT → SDc

10

EP 1 986 130 A1

**Description**

**CROSSREFERENCES TO RELATED APPLICATIONS**

The present invention contains subject matter related to Japanese Patent Application JP 2007-114305 filed in the Japanese Patent Office on April 24, 2007, the entire contents of which being incorporated herein by reference.

**BACKGROUND OF THE INVENTION**

**1. Field of the Invention**

This invention relates to an apparatus and a method of determining a similar image, a program product therefor, and recording medium that records the program product.

**2. Description of Related Art**

Digitized image data has stored easily accompanying increase in capacity and fall in price of storage medium such as a hard disk, an optical disk, and a memory card. It, however, becomes difficult to search an image easily if there is a large amount of image data stored in the storage medium. For example, it is difficult to search any similar images of a subject easily from many kinds of images or search a scene relative to a similar subject easily from video.
Japanese Patent Application Publication No. 2005-327065 has disclosed that in order to enable any similar image to be searched from a database relative to images, the image is divided into some blocks, matching calculation is performed for every block, and these calculation results are integrated so that the similar image can be searched. Japanese Patent Application Publication No. 2006-58959 has disclosed that any differences between images are calculated and values of the differences are shown as histograms, thereby determining whether or not it is the similar image based on the histograms.

**SUMMARY OF THE INVENTION**

If, however, as disclosed in Japanese Patent Application Publication No. 2005-327065, the image is divided into some blocks and the matching calculation is performed for every block, it is difficult to determine the similar image correctly in a case where a size of the image has been changed or in accordance with a state of a phase in the block when dividing the image into the blocks. If the determination is performed using the differences between the images as disclosed in Japanese Patent Application Publication No. 2006-58959, it is difficult to determine the similar image correctly because a value of the difference is shifted to a larger value thereof when phases in images of the subject do not coincide with each other to some extent.
It is desirable to present an apparatus and a method of determining similar image, a program product therefor, and recording medium that records the program product, which are able to determine an identical or similar image correctly.
According to an embodiment of the present invention, there is provided an apparatus of determining a similar image. The apparatus contains a subject-region-detecting unit that detects a subject region from a received image, a pixel-value-distribution-generating unit that generates pixel value distribution of pixels included in the subject region detected by the subject-region-detecting unit, and a determination unit that determines whether or not an image relative to the subject region is similar to a previously registered subject image based on the pixel value distribution generated by the pixel-value-distribution-generating unit and a registered pixel value distribution of the previously registered subject image.
By the apparatus of determining the similar image as an embodiment of the present invention, it is possible to extract an image of the subject by detecting the subject region from the received image even if the subjects have different sizes and/or phases. Further, by comparing the pixel value distribution of pixels included in the subject region with a registered pixel value distribution of the previously registered subject image, it is possible to determine whether or not an image relative to the subject region is similar to a registered subject image.
According to another embodiment of the present invention, there is provided a method of determining a similar image. The method contains a subject-region-detecting step of detecting a subject region from a received image, a pixel-value-distribution-generating step of generating pixel value distribution of pixels included in the subject region detected in the subject-region-detecting step, and a determination step of determining whether or not an image relative to the subject region is similar to a previously registered subject image based on the pixel value distribution generated in the pixel-value-distribution-generating step and a registered pixel value distribution of the previously registered subject image.
According to further embodiment of the present invention, there is provided a program product that allows a computer to execute the method of determining the similar image and recording medium that records the program product.

By the embodiments of the present invention, the subject region is detected from the received image and, by determining whether or not the pixel value distribution of pixels included in the subject region is similar to a registered pixel value distribution of the previously registered subject image, it is possible to determine whether or not an image relative to the subject region is similar to the registered subject image.

Therefore, it is possible to determine whether or not a subject image in the received image is similar to the registered subject image correctly, even if the subject images occupy different positions in the received image, without being influenced by the difference positions as far as possible.

The concluding portion of this specification particularly points out and directly claims the subject matter of the present invention. However, those skilled in the art will best understand both the organization and method of operation of the invention, together with further advantages and objects thereof, by reading the remaining portions of the specification in view of the accompanying drawing(s) wherein like reference characters refer to like elements.

**BRIEF DESCRIPTION OF THE DRAWINGS**

FIG. 1 is block diagram for showing a configuration example of a similar image determination apparatus;
FIG. 2 is a block diagram for showing a configuration example of a subject-region-detecting unit;
FIGS. 3A through 3E are diagrams each for showing operations of the subject-region-detecting unit;
FIG. 4 is a block diagram for showing another configuration example of the subject-region-detecting unit;
FIGS. 5A through 5E are diagrams each for showing other operations of the subject-region-detecting unit;
FIG. 6 is a block diagram for showing further configuration example of the subject-region-detecting unit;
FIGS. 7A through 7C are diagrams each for showing operations of a pixel-value-distribution-generating unit;
FIGS. 8A and 8B are diagrams each for showing operations of a determination unit;
FIGS. 9A through 9D are diagrams for showing a relationship between a size of an image and a sort waveform;
FIGS. 10A through 10C are diagrams each for explaining a correction processing of number of pixels in the sort waveform;
FIGS. 11A through 11C are diagrams each for showing other operations of the pixel-value-distribution-generating unit;
FIGS. 12A through 12C are diagrams each for showing other operations of the determination unit;
FIG. 13 is a diagram for showing a configuration example in a case where a similar image determination is performed by software;
FIG.14 is a flowchart for showing similar image determination operations;
FIG. 15 is a flowchart for showing subject region detection operations; and
FIG. 16 is a flowchart for showing other subject region detection operations.

**DESCRIPTION OF THE PREFERRED EMBODIMENTS**

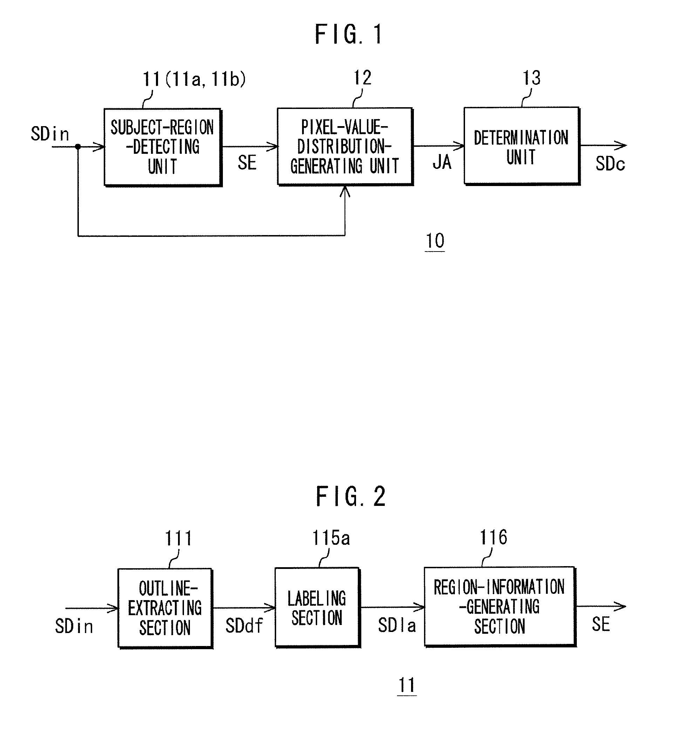

The following will describe embodiments of the present invention with reference to the drawings. FIG. 1 shows a configuration example of an embodiment of a similar image determination apparatus 10 according to the present invention.

The similar image determination apparatus 10 contains a subject-region-detecting unit 11, a pixel-value-distribution-generating unit 12, and a determination unit. The subject-region-detecting unit 11 and the pixel-value-distribution-generating unit 12 respectively receive an image signal SDin of an input image. The subject-region-detecting unit 11 detects a subject region by using the image signal SDin, generates a region signal SE that indicates the detected subject region, and supplies it to the pixel-value-distribution-generating unit 12. The pixel-value-distribution-generating unit 12 in turn extracts a pixel signal for the subject region indicated by the region signal SE from the image signal SDin and, generates a pixel value distribution JA based on the extracted signal and then supplies it to a determination unit 13.

The determination unit 13 determines whether or not the image of the detected subject region is similar to a subject image registered beforehand, by using the pixel value distribution received from the pixel-value-distribution-generating unit 12 and a registered pixel value distribution of this subject image registered, thereby providing a determination result signal SDc.

Next, the configuration examples and the operations of the components of the apparatus will be described below sequentially. FIG. 2 shows a configuration example of the subject-region-detecting unit 11. The subject-region-detecting unit 11 contains an outline-extracting section 111, a labeling section 115a, and a region-information-generating section 116.

The outline-extracting section 111 in the subject-region-detecting unit 11 extracts an outline in an input image and generates an image signal SDdf of an image (hereinafter referred to as "differential image") that indicates the outline from the image signal SDin of the input image. The outline-extracting section 111 performs difference calculation on pixel values between a current pixel and an adjacent pixel for each pixel and compares a calculation result thereof with a threshold value, to extract the outline of the subject.

A feature value V of the target pixel is calculated on the basis of, for example, Equation 1.

$$V = \left| 4 \times Lo - La - Lb - Lc - Ld \right| \qquad \ldots (1)$$

where Lo is a pixel value of the target pixel, La is a pixel value of its left adjacent pixel, Lb is a pixel value of its right adjacent pixel, Lc is a pixel value of its upper adjacent pixel, and Ld is a pixel value of its lower adjacent pixel.

The outline-extracting section 111 compares this calculated feature value V with a predetermined threshold and, if the feature value V is greater than the threshold value, sets the pixel value of the target pixel as a first identification value, for example, "255" in a case where the image signal of the differential image is given in eight bits. On the other hand, if the feature quantity V is not greater than the threshold value, the outline-extracting section 111 sets the pixel value of the target pixel as a second identification value of "0". A binary signal obtained by performing such processing on every pixel corresponds to an image signal that indicates the outline and so is used as the image signal SDdf of the differential image. It is to be noted that in the image signal SDdf, the pixel of the first identification value corresponds to that of the outline and the pixel of the second identification value, to that of portions other than the outline.

The labeling section 115a performs labeling processing by using the image signal SDdf of the differential image generated by the outline-extracting section 111. If the differential image contains a pixel of the first identification value "255", the labeling section 115a imparts a label number to this pixel. Further, the labeling section 115a detects unlabeled pixel(s) of the first identification value "255" among the pixels that are adjacent to the thus labeled pixel upward or downward, rightward or leftward, or obliquely and imparts the identical label number to the detected pixel(s). Then, if there are no more pixels detected to which the same label number can be imparted, the labeling section 115a changes the label number (for example, counts up the label number) to set a new label and detects the pixels of the first identification value "255" that is not labeled. If having detected the pixel of the first identification value "255" that is not labeled, the labeling section 115a imparts a new label number to the detected pixel. Further, the labeling section 115a imparts the new label number to the unlabeled pixels that are of the first identification value "255" and that are upward or downward, rightward or leftward, or obliquely adjacent to the pixel to which the label number is imparted. Similarly, if there are no more pixels detected to which the same label number can be imparted, the labeling section 115a changes the label number to repeat the above-mentioned processing, thereby enabling the labeling section 115a to impart label numbers to all of the pixels of the first identification value "255". By thus imparting label numbers, one label number will be imparted to the consecutive outlines.

Next, the labeling section 115a counts the number of the pixels belonging to each of the label numbers, changes the pixel values of the pixels other than those having the label number with the largest number of the pixels from the first identification value "255" to the second identification value "0" except for the longest consecutive outline, and supplies a labeling processing signal SD1a after the labeling processing to a region-information-generating section 116.

The region-information-generating section 116 generates the region signal SE that indicates a subject region from the labeling processing signal SD1a obtained upon completion of the labeling processing by the labeling section 115a. The region-information-generating section 116 extracts a region enclosed by the longest consecutive outline, that is, a region enclosed by the pixels of the first identification value "255" as the subject region, changes the second identification value "0" of the pixels in this subject region to the first identification value "255", and provides it as the region signal SE. Determination as to whether or not the pixel is contained in the subject region can be made by, for example, detecting whether the pixel of the first identification value "255" presents in all of the upward and downward, rightward and leftward, and oblique directions with respect to the pixel of the second identification value "0". If the pixel of the first identification value "255" presents in all of the directions, the pixel is set to be within the subject region. It should be noted that in the region signal SE, the pixels of the first identification value are indicated to be inside the subject region and those of the second identification value to be outside the subject region.

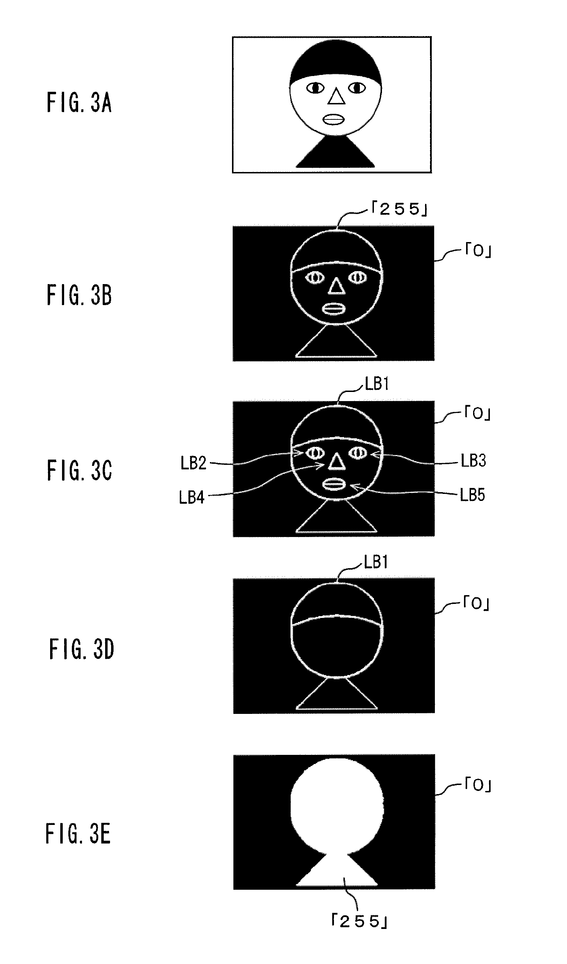

FIGS. 3A through 3E shows operations of the subject-region-detecting unit 11. FIG. 3A exemplifies an input image, that is, if the image signal SDin relative to this input image is input to the subject-region-detecting unit 11, the outline-extracting section 111 calculates a feature value V of each of target pixels and compares the calculated feature value with a predetermined threshold value for each pixel. Therefore, the image signal SDdf supplied from the outline-extracting section 111 to the labeling section 115a indicates a differential image shown in FIG. 3B. It is to be noted that in FIG. 3B, the pixels of the second identification value "0" are shown in "black" and those of the first identification value "255" are shown in "white".

The labeling section 115a performs labeling processing by using the image signal SDdf of the differential image. To the pixels of the first identification value "255", label numbers LB1-LB5 are imparted as shown in FIG. 3C. Then, the labeling section 115a changes the first identification value "255" of the pixels of the label numbers LB2-LB5 other than the pixels having the label number LB1 imparted to the largest number of pixels to the second identification value "0", thereby providing the labeling processing signal SD1a. Therefore, the labeling processing signal SD1a supplied from the labeling section 115a to the region-information-generating section 116 gives an image shown in FIG. 3D, in which only an outline having the longest consecutive length (pixels having the label number LB1) is shown.

The region-information-generating section 116 generates a region signal SE that indicates a subject region from the labeling processing signal SD1a. The region-information-generating section 116 extracts a region enclosed by the pixels of the first identification value "255" as a region of a subject and changes the second identification value "0" inside this region to the first identification value "255". Therefore, the region signal SE output from the region-information-generating section 116 indicates a subject region, which is the region of the first identification value "255" as shown in FIG. 3E.

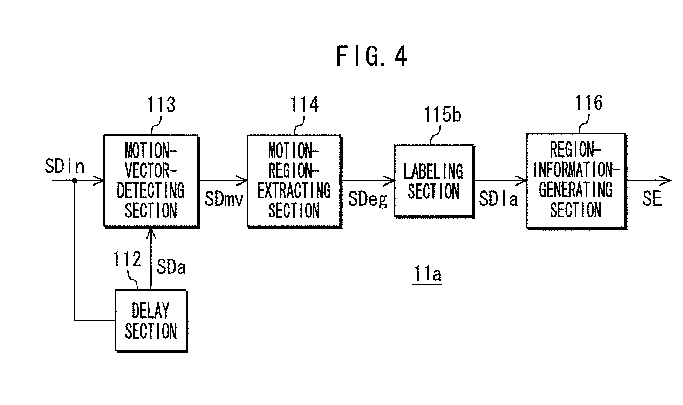

Although the subject-region-detecting unit 11 shown in FIG. 2 has generated the region signal SE that indicates the subject region based on the differential image obtained through outline extraction, the detection of a subject region is not limited to the case of performing the outline extraction. FIG. 4 shows another configuration of the subject-region-detecting unit in which a subject region is detected using a motion vector.

This subject-region-detecting unit 11a contains a delay section 112, a motion-vector-detecting section 113, a motion-region-extracting section 114, a labeling section 115b, and a region-information-generating section 116. The delay section 112 and the motion-vector-detecting section 113 respectively receive an image signal SDin of an input image.

The delay section 112 delays the image signal SDin by one frame and supplies it as a delayed image signal SDa to the motion-vector-detecting section 113.

The motion-vector-detecting section 113 detects a motion vector MV from the image signal SDin and the delayed image signal SDa. The motion-vector-detecting section 113 divides the image signal SDin into, for example, 64 (=8x8) blocks and detects a position in a predetermined search of the delayed image signal SDa at which a sum of absolute difference values becomes smallest, thereby detecting a motion vector MV for each of the blocks.

Based on the motion vectors MV detected by the motion-vector-detecting section 113, the motion-region-extracting section 114 extracts as a motion region an image region relative to the motion vectors that stay within a predetermined order range when ranking the motion vectors MV in accordance with number of pixels for each motion vector. For example, the motion-region-extracting section 114 generates a histogram that indicates the number of pixels for each motion vector. The motion-region-extracting section 114 extracts the motion vector with the largest number of pixels as the motion of a background and extracts as the motion regions of the subject the image regions having the number of pixels in a predetermined order range, for example, image regions of the motion vectors with the second-largest through 15-th largest numbers of pixels. The motion-region-extracting section 114 then sets as a motion vector range of the subject the motion vectors with, for example, the second-largest through 15-th largest numbers of pixels and sets the pixels belonging to this motion vector range of the subject to the first identification value "255". The motion-region-extracting section 114 also sets the pixels not belonging to this motion vector range of the subject to the second identification value "0". A binary signal obtained through such processing is provided as a region extraction signal SDeg. It is to be noted that in the motion region extraction signal SDeg, the pixels of the first identification value are indicated as those corresponding to the motion of the subject and those of the second identification value, as those not corresponding to the motion of the subject.

The labeling section 115b performs processing, which is similar to the processing performed on the image signal SDdf by the above-described labeling section 115a, on the motion region extraction signal SDeg received from the motion-region-extracting section 114 to generate the labeling processing signal SD1a. Further, the region-information-generating section 116 performs processing to generate the region signal SE that indicates a subject region from the labeling processing signal SD1a as described above.

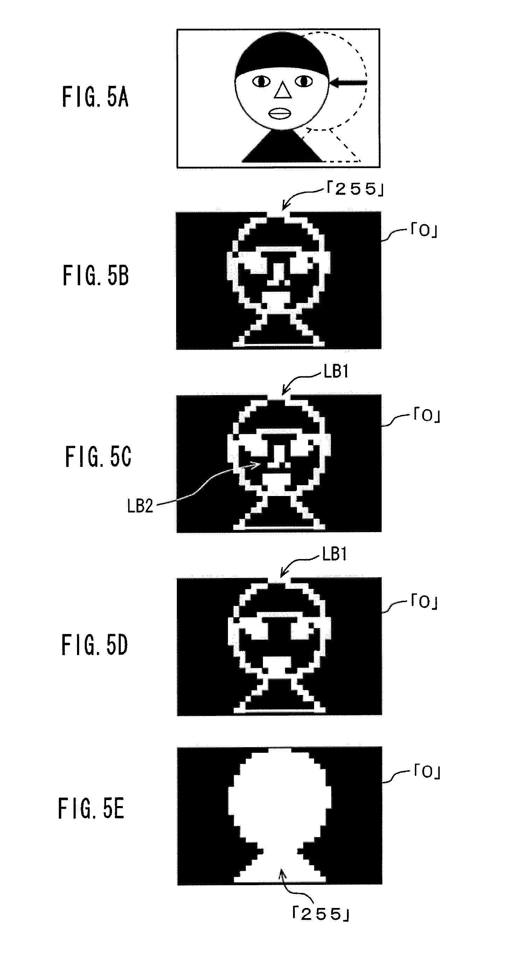

FIGS. 5A through 5E show operations of the subject-region-detecting unit 11a as other operations of the subject-region-detecting unit. FIG. 5A exemplifies an input image. It is to be noted that in FIG. 5A, a broken line indicates an image position at which the subject (a person) is placed one frame before. When receiving the image signal SDin relative to this input image, the motion-vector-detecting section 113 detects a motion vector from the image signal SDin and the delayed image signal SDa and supplies it to the motion-region-extracting section 114.

Based on the received motion vector MV, the motion-region-extracting section 114 generates an image shown in FIG. 5B in which the pixels are partitioned into the pixels of the motion vectors belonging to the motion vector range of the subject and those of the motion vectors not belonging to the motion vector range of the subject and supplies the labeling section 115b with the region extraction signal SDeg that indicates this image.

The labeling section 115b performs labeling processing as described above by using the motion region extraction signal SDeg received from the motion-region-extracting section 114. To the pixels of the first identification value "255", label numbers LB1 and LB2 are imparted as shown in FIG. 5C, for example. Then, the labeling section 115b changes the first identification value "255" of the pixels having the label numbers other than the label number of the largest number of the pixels to the second identification value "0". Therefore, the first identification value "255" of the pixels having the label number LB2 is changed to the second identification value "0", so that the labeling processing signal SD1a, which is supplied from the labeling section 115b to the region-information-generating section 116, indicates the image obtained after the labeling processing shown in FIG. 5D.

The region-information-generating section 116 generates the region signal SE that indicates the subject region. The region-information-generating section 116 extracts, as the subject region, a region enclosed by the pixels of the first identification value "255" as described above and changes the second identification value "0" of the pixels inside this region to the first identification value "255". Therefore, the region signal SE which is output from the region-information-generating section 116 indicates such a subject region as to be that of the first identification value "255" as shown in FIG. 5E.

Furthermore, in the subject-region-detecting unit, a subject region can be detected more surely and accurately if the subject region is determined by using both the result of region detection based on an image obtained through outline extraction and the result of region detection based on a motion vector.

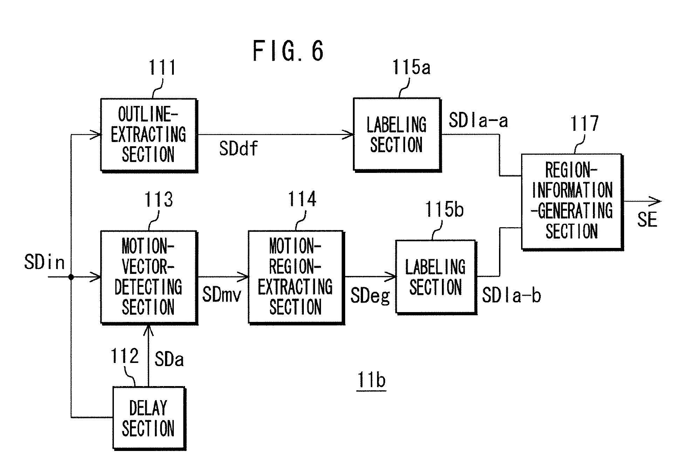

FIG. 6 shows further configuration example of the subject-region-detecting unit by which a subject region is determined by using both the region detection result based on an image obtained through the outline extraction and the region detection result based on a motion vector. It should be noted that in the subject-region-detecting unit 11b shown in FIG. 6, components corresponding to those in FIGS. 2 and 4 are indicated by the same symbols and their detailed explanation is omitted.

A region-information-generating section 117 in FIG. 6 extracts a region enclosed by the pixels of the first identification value "255" from a labeling processing signal SD1a-a received from the labeling section 115a and changes the second identification value "0" of the pixels inside this subject region to the first identification value "255", thereby providing a first region detection result. The region-information-generating section 117 also extracts a region enclosed by the pixels of the first identification value "255" from a labeling processing signal SD1a-b received from the labeling section 115b and changes the second identification value "0" of the pixels inside this subject region to the first identification value "255", thereby providing a second region detection result. If, in the first region detection result and the second region detection result, pixel regions of the first identification value "255" overlap with each other, the region of the first identification value "255" indicated by the second region detection result is supposed to be a subject region. On the other hand, if the pixel regions of the first identification value "255" do not overlap with each other, their respective pixel regions are supposed to be subject regions, thereby generating the region signal SE that indicates these subject regions.

By thus determining the subject region by using both a region detection result based on an image obtained through the outline extraction and a region detection result based on the motion vector, no matter whether a subject is moving or standing still, it is possible to detect a subject region in which this subject is included. Further, by preferentially using a region detected on the basis of a motion vector, it is possible to detect the region of a moving subject highly accurately.

Further, almost the same effects can be obtained also if the subject-region-detecting unit partitions an input image into a moving image region and a still image region beforehand, detects a subject region based on an image obtained through the outline extraction in the case of the still image region and a subject region based on the motion vector in the case of the moving image region.

Next, the pixel-value-distribution-generating unit 12 shown in FIG. 1 extracts the pixel signal relative to the subject region from the image signal SDin based on the region signal SE received from the subject-region-detecting unit 11 and, based on the extracted pixel signal, generates a pixel value distribution of the pixels of the subject region.

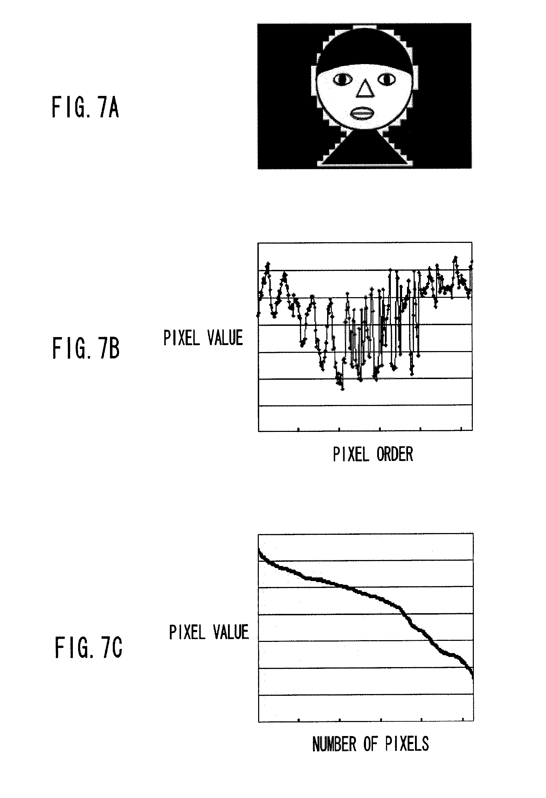

FIGS. 7A through 7C show operations of the pixel-value-distribution-generating unit 12. It is to be noted that in FIGS. 7A through 7C, shown are those operations in the case of generating a sort waveform obtained by sorting the pixels in a subject region in an order of their pixel values as a pixel value distribution. FIG. 7A shows an input image based on the image signal SDin in combination with a subject region detected by the subject-region-detecting unit 11, in which the subject image in the input image is contained. It is to be noted that FIG. 7A shows a case where the subject region shown in FIG. 5E is used.

The pixel-value-distribution-generating unit 12 extracts the pixel value signals of the subject region from the image signal SDin in a raster scan order. Herein, if the pixel value is given along a vertical axis and the pixel order of the extracted pixels is given along a horizontal axis, the distribution thereof will be shown in FIG. 7B. Furthermore, the pixel-value-distribution-generating unit 12 sorts the extracted pixels in an ascending order of the pixel values. In this case, the distribution shown in FIG. 7B is transformed into that of FIG. 7C. The pixel-value-distribution-generating unit 12 provides the distribution (hereinafter referred to as "sort waveform") of FIG. 7C obtained after signal sorting as a pixel value distribution and an information signal JA that indicates this pixel value distribution to the determination unit 13 as shown in FIG. 1.

The determination unit 13 determines whether or not the image of the subject region is similar to a subject image registered beforehand from the pixel value distribution indicated by the information signal JA received from the pixel-value-distribution-generating unit 12 and a registered pixel value distribution of the subject images registered beforehand and outputs a determination result signal SDc. For example, if the pixel value distribution indicated by the information signal JA and the registered pixel value distribution each exhibit a sort waveform, the determination unit 13 calculates a sum of absolute difference values between the sort waveform which is the pixel value distribution indicated by the information signal JA and the sort waveform which is the registered pixel value distribution. Further, if there are plural registered pixel value distributions of the subject images, the determination unit 13 calculates total sum of the absolute difference values for each of the registered sort waveforms.

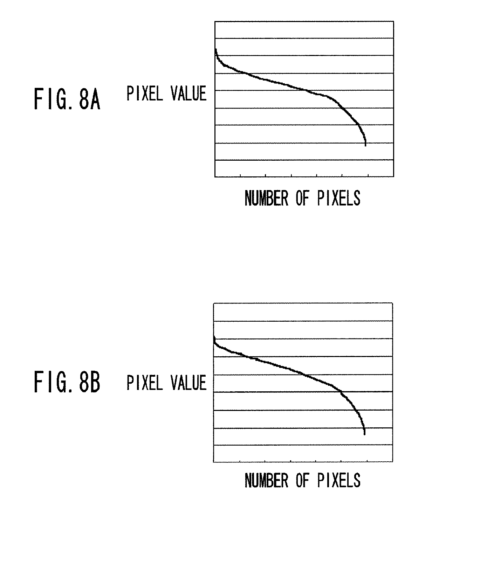

FIGS. 8a and 8B are operations of the determination unit 13. FIG. 8A exemplifies a sort waveform, which is the pixel value distribution indicated by the information signal JA supplied from the pixel-value-distribution-generating unit 12, and FIG. 8B exemplifies a sort waveform, which is the registered pixel value distribution registered in the determination unit 13. The determination unit 13 calculates a total sum of absolute difference values between the sort waveform indicated by the information signal JA and the sort waveform of the registered pixel value distribution.

In this case, if the image of the subject region is similar to the registered subject image, their sorted images are similar to each other, so that the total sum of absolute difference values decreases. Therefore, the determination unit 13 can determine whether or not the subject region image is similar to the subject image registered beforehand based on the total sum of absolute difference values. Further, by identifying such a sort waveform that the total sum of absolute difference values may be minimized, it is possible to select a subject image that is most similar to the image of a subject region among a plurality of subject images registered beforehand.

Furthermore, by determining whether or not the waveform is smaller than a preset threshold value in addition to the identification of such a sort waveform that the total sum of absolute difference values may be minimized, it is possible to improve an accuracy at which the same subject can be identified. For example, if a sort waveform is not registered which is generated from a subject image that is similar to the image of a subject region in an input image when a sort waveform is determined only on the condition that the total sum of absolute difference values is minimized, even a subject image different from the image of the subject region in the input image may be determined to be most similar to a subject image that corresponds to such a sort waveform that the total sum of absolute difference values may be minimized. Therefore, if the condition that the total sum of absolute difference values is smaller than a preset threshold value is established, by presetting the threshold value smaller than a total sum of absolute difference values of a sort waveform of a subject image different from the image of a subject image in an input image, it is possible to prevent the different subject image from being determined to be most similar to that image of the subject region, thereby improving the determination accuracy.

The determination result signal SDc output from the determination unit 13 may indicate information which indicates the result of determination on whether the image of the subject region is similar to the subject image registered beforehand or indicate an image signal of the most similar subject image. Further, if it indicates information correlated with the similar subject image or a position at which it is recorded, for example, information such as the name or address of a person in a case where his face is the subject image, it is possible to rapidly obtain the information concerning the person indicated by the image of the subject region. Further, if a moving image is stored in storage means, when reproducing the moving image, by indicating a reproduction start timing at which this similar subject image is included in a frame image, it is possible to rapidly reproduce a scene, for example, in which a person appears who is indicated by the image of the subject region. Further, by indicating information of a moving image in which the similar subject image is included, for example, information such as a title or a recording date/time, it is possible to easily search for, for example, a program in which a person appears who is indicated by the image of the subject region.

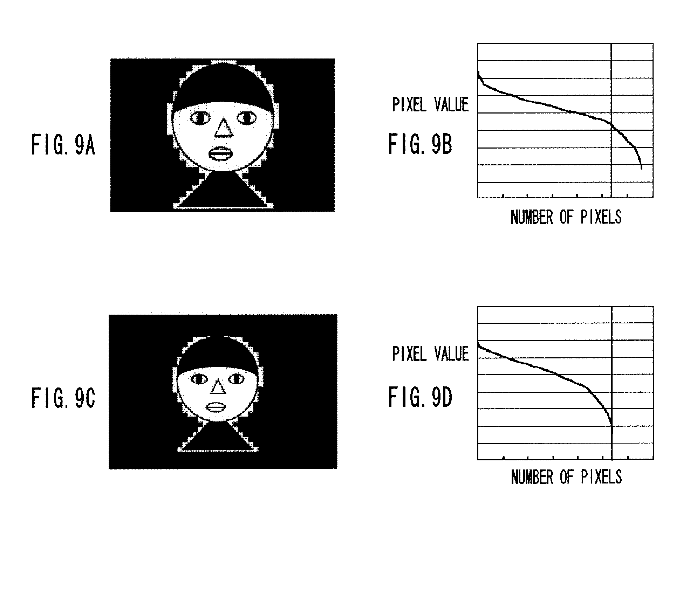

If an image of a subject region has an image size different from that of a subject image registered beforehand, those images have different sort waveforms even if they are of the same subject. FIGS. 9A through 9D show a relationship between a size of an image and a sort waveform. Here, suppose a sort waveform for an image of a subject region of FIG. 9A to be a waveform shown in FIG. 9B. If the image size of a registered subject image is smaller than that of FIG. 9A as shown in FIG. 9C, the number of the pixels is decreased, so that the sort waveform may be such as shown in FIG. 9D in which the sort waveform shown in FIG. 9B is shrunk in the horizontal-axial direction. Therefore, if the determination unit 13 does not register the sort waveforms generated from subject images having various image sizes, an absolute difference value between the sort waveforms cannot be calculated for some of the pixels. However, if the determination unit 13 registers the sort waveforms of the subject images having different image sizes beforehand, sort waveforms to be registered is increased, so that a high-capacity storage apparatus may be required. It also leads to prolonged time to make determination on the similar sort waveforms.

If, thus, the number of pixels in a pixel value distribution of the images of the subject region is different from that in a registered pixel value distribution, correction processing is performed to correct the pixel value distributions so that the numbers of the pixel values may be equal to each other. That is, by performing number-of-pixel correction processing to equalize the number of pixels of the sort waveform indicated by the information signal JA to that of the sort waveform of the pixel value distribution registered beforehand and comparing the sort waveform obtained after the number-of-pixel correction processing with that of the pixel value distribution registered beforehand, it is possible to make determination on the similar sort waveforms irrespective of the image size of the images of the subject region. It is to be noted that normalization processing may be performed at either the pixel-value-distribution-generating unit 12 or the determination unit 13.

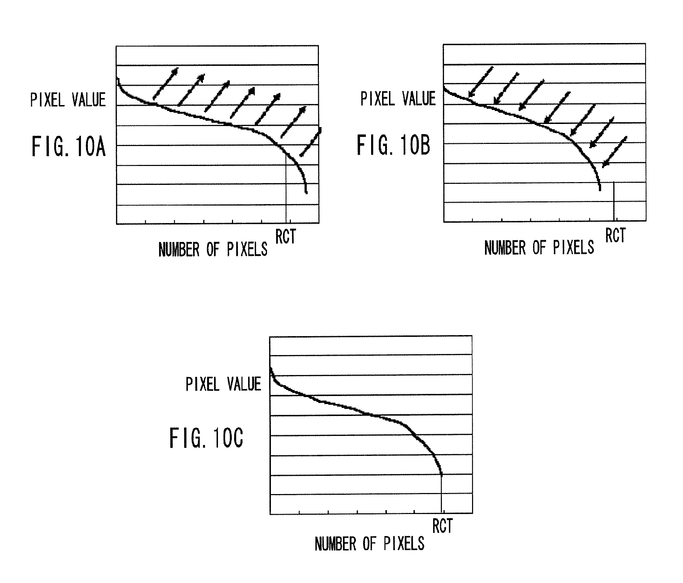

FIGS. 10A through 10C show a correction processing of number of pixels in the sort waveform. For example, as shown in FIG. 10A, if the number of pixels of a sort waveform is larger than a preset number of pixels RCT, a pixel signal is thinned at a certain interval so that the number of pixels of the sort waveform may be equal to the number of pixels RCT, thereby converting the sort waveform into that of the number of pixels RCT as shown in FIG. 10C. On the other hand, as shown in FIG. 10B, if the number of pixels of the sort waveform is smaller than the preset number of pixels RCT, the pixel signal is interpolated at the certain interval so that the number of pixels of the sort waveform may be equal to the number of pixels RCT, thereby converting the sort waveform into that of the number of pixels RCT as shown in FIG. 10C. It is to be noted that arrows in FIG. 10A indicate the thinning of the pixel signal at the certain interval and arrows in FIG. 10B indicate the interpolation of the pixel signal at the certain interval. Further, in the interpolation of the pixel signal, a target pixel position is interpolated between adjacent two pixels, for example.

By thus performing the thinning or interpolation at a certain interval on a sort waveform, it is possible to control the number of pixels of the sort waveform to a predetermined number of pixels without changing the characteristics of the waveform as a whole greatly, because the sort waveform has few sharp changes.

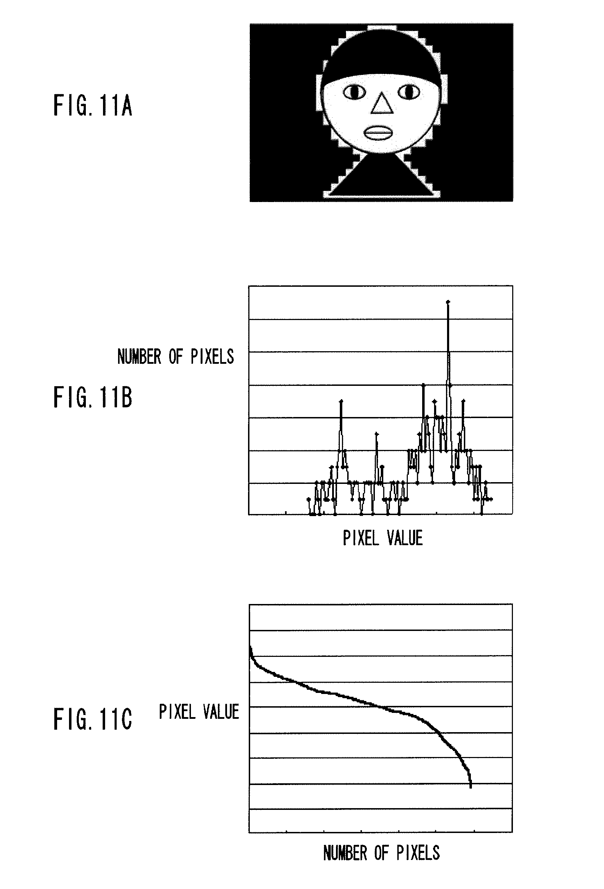

The following describe a case where, in a pixel-value-distribution-generating unit 12, a histogram in which the pixels of a subject region are distributed into classes in accordance with their pixel values with reference to FIGS. 11A through 11C.

FIG. 11A shows an input image based on the image signal SDin in combination with a subject region detected by the subject-region-detecting unit 11. It is to be noted that FIG. 11A shows a case where such subject region as shown in FIG. 5E is used.

The pixel-value-distribution-generating unit 12 extracts pixel signals of subject regions from the image signal SDin in a raster scan order. Furthermore, it can determine classes to which the signal levels of the extracted pixel signals belong and count up the frequency of those classes belonging the signal levels, thereby generating a histogram as shown in FIG. 11B. It is to be noted that the histogram may be generated from a sort waveform shown in FIG. 11C. In this case, the histogram can be generated easily because the pixels are arranged in a descending order of the pixel values in the sort waveform.

The determination unit 13 determines whether or not the image of the subject region is similar to a subject image registered beforehand from a histogram which is a pixel value distribution indicated by the information signal JA supplied from the pixel-value-distribution-generating unit 12 and a histogram which is a registered pixel value distribution of a subject image registered beforehand and then outputs the determination result signal SDc.

Based on a ratio of a logical product (AND) region of the two histograms with respect to their logical sum (OR) region, the determination unit 13 determines whether the image of the subject region is similar to the subject image registered beforehand.

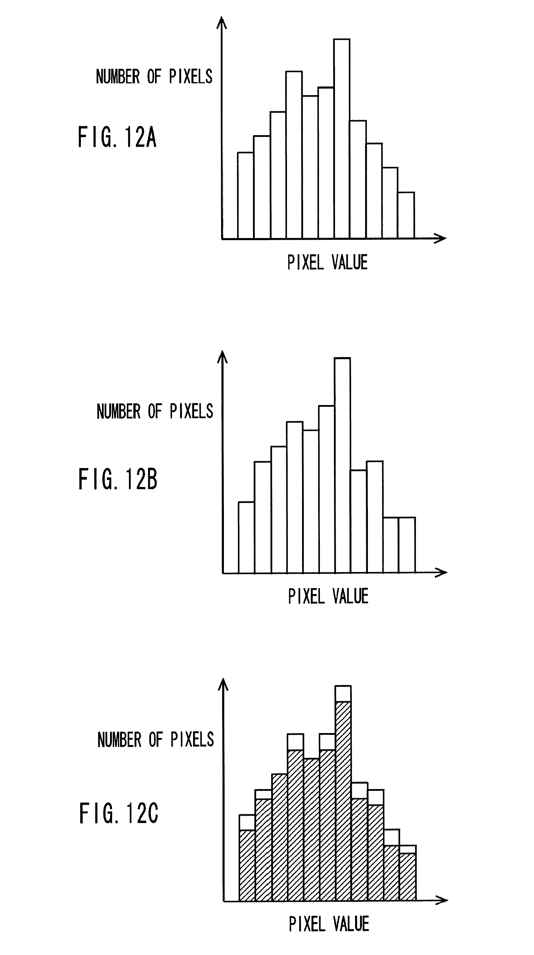

FIGS. 12A through 12C show other operations of the determination unit 13. FIG. 12A shows a histogram which is a pixel value distribution indicated by the information signal JA supplied from the pixel-value-distribution-generating unit 12 and FIG. 12B is a registered pixel value distribution registered in the determination unit 13. Those two histograms are superposed on each other in a condition where their classes are equalized to each other, thus resulting in such as shown in FIG. 12C. In this FIG. 12C, hatched regions provide the AND region of the region of the histogram which is the pixel value distribution and that indicated by the registered information, while the hatched regions plus non-hatched regions provide the OR region of the region of the histogram which is the pixel value distribution or that indicated by the registered information.

In this case, if a subject region image is similar to the registered subject image, their histograms are also similar to each other. Therefore, the determination unit 13 can determine whether or not the subject region image is similar to the subject image registered beforehand based on the ratio of the AND region with respect to the OR region. Further, the determination unit 13 can select a subject image that is most similar to the subject region image among a plurality of subject images registered beforehand, by identifying such a histogram that the ratio of the AND region with respect to the OR region may be maximized. Furthermore, the determination unit 13 can set a threshold in the same way as in the case of using a sort waveform and identify such a histogram that the ratio of the AND region with respect to the OR region may be larger than the threshold value, thereby improving the accuracy for identifying the same subject.

Further, in the case of using the histogram as a pixel value distribution when the images have different sizes, the number-of-pixel correction processing can be performed on a sort waveform to then generate the histogram from the sort waveform obtained after the number-of-pixel correction processing is thus performed. Performing the number-of-pixel correction processing on a sort waveform prevents characteristics of the waveform as a whole from being changed greatly. Therefore, the histogram obtained after the number-of-pixel correction processing is performed prevents the pixel value distribution before the number-of-pixel correction processing is performed from being greatly changed.

If using the histogram as a pixel value distribution, in correction, the frequency of each class may be multiplied by a coefficient corresponding to a difference in number of pixels of the pixel value distribution so that the number of the pixels in the pixel value distribution may be corrected to a predetermined number of pixels.

As described above, the similar image determination apparatus 10 extracts the pixels of a subject region from an input image and determinates whether or not the subject region image is similar from the pixel value distribution such as the sort waveform and the histogram based on the pixel values of the extracted pixels and the pixel value distribution registered in the determination unit 13 beforehand. Accordingly, even if the subject images have different positions in a frame image, that is, even if the phase of a subject changes, the subject image can be determined properly by extracting the pixels from the detected subject region. Furthermore, even if the images have different sizes, the number-of-pixel correction processing is performed on the pixel value distribution, so that the similar subject image can be determined properly in a condition where an influence due to a difference in image sizes is reduced.

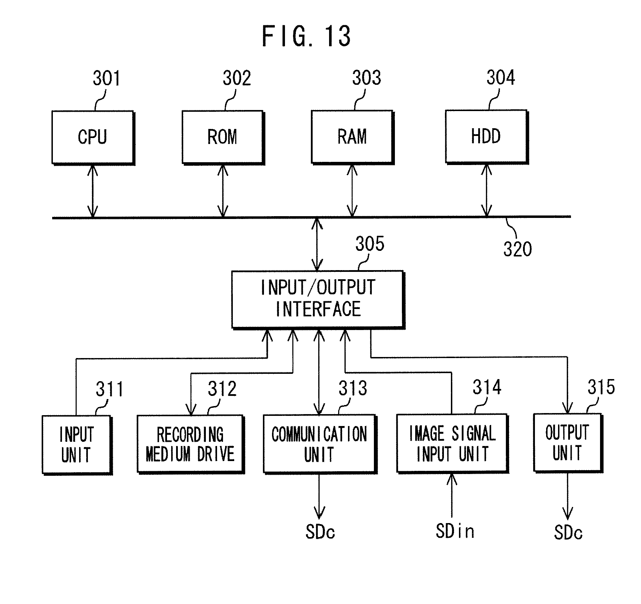

The above-described processing may be realized not only by hardware but also by software. In this case, FIG. 13 shows such a configuration example. A computer incorporates a central processing unit (CPU) 301. To this CPU 301, a read only memory (ROM) 302, a random access memory (RAM) 303, a hard disk drive (HDD) 304, and an input/output interface 305 are connected via a bus 320. Further, to the input/output interface 305, an input unit 311, a recording medium drive 312, a communication unit 313, an image signal input unit 314, and an output unit 315 are connected.

If an instruction is input from an external apparatus or the input section 311 constituted of manipulation device such as a keyboard or a mouse or audio input device such as a microphone, the CPU 301 receives this instruction via the input/output interface 305.

The CPU 301 performs processing in accordance with the received instruction by executing a program stored in the ROM 302 or the RAM 303 or the hard disk drive 304. Further, the ROM 302 or the RAM 303 or the hard disk drive 304 stores beforehand an image processing program and image database in order to cause the computer to perform the same processing as that by the above-described similar image determination apparatus. The CPU then outputs from the output unit 315 an image signal relative to the subject image similar to a target subject image or information etc. correlated with the similar subject image as the determination result signal SDc based on an image signal SDin input to the image signal input unit 314. Further, the determination result signal SDc may be configured to be output from the communication section 313 etc. Further, if moving images are stored in the HDD 304, such a moving image in which this similar subject image may be included in a frame image may be reproduced and output from the output section 315. Further, if images are stored in any other storage device, information correlated with the similar subject image or positions where the similar subject image is recorded or a reproduction start timing at which the similar subject image is included in the frame image may be supplied as the determination result signal SDc from the communication section 313 or the output section 315 to another storage device so that, for example, the similar subject image may be reproduced.

Also, by storing the image processing program and the image database in a storage medium, the recording medium drive 312 may read the image processing program out of the storage medium and then, the computer executes it to determine the similar subject image by using information registered in the image database recorded in the recording medium. Further, the communication section 313 may communicate the image processing program and the image database via a transmission path and the computer may execute the image processing program if received.

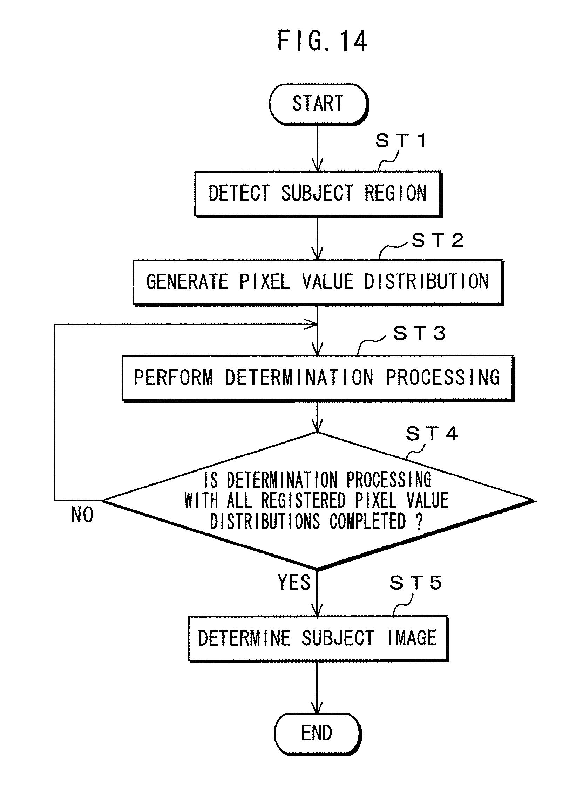

FIG. 14 shows a flowchart for showing the similar image determination operations that the CPU 301 executes. At step ST1, the CPU 301 detects a subject region and generates region information.

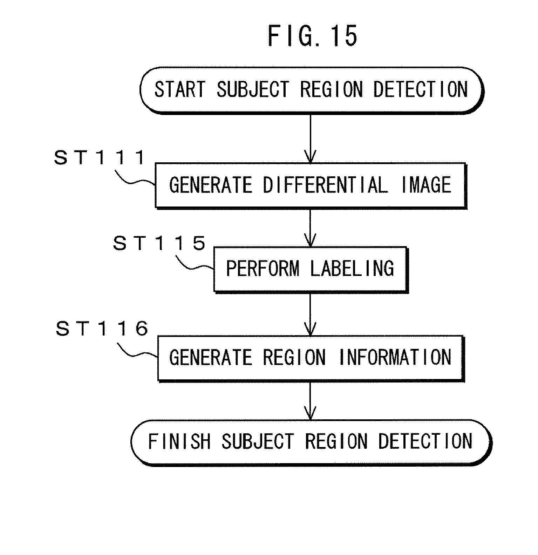

FIG. 15 shows a flowchart for showing the subject region detection operations. At step ST111, the CPU 301 generates a differential image. The CPU 301 calculates a feature value V by using the image signal SDin as described above, compares this feature value V with a predetermined threshold value, and generates the differential image indicative of outline pixels based on the result of the comparison.

At step ST115, the CPU 301 performs labeling. The CPU 301 imparts a label number to an outline pixel of the differential image and also imparts the same label number to the outline pixels that are upward or downward, rightward or leftward, or obliquely adjacent to the pixel to which this label number is imparted. Further, if any pixels to which the same label number can be imparted are not detected, the CPU 301 changes the label number to a new label number and imparts this new label number. If having imparted the label numbers completely, the CPU 301 counts the number of pixels belonging to the same label number and generates an image remaining only those having the label number with the largest number of the pixels.

At step ST116, the CPU 301 generates region information. The CPU 301 recognizes a region enclosed by the label number with the largest number of pixels as a subject region and generates region information that indicates this subject region.

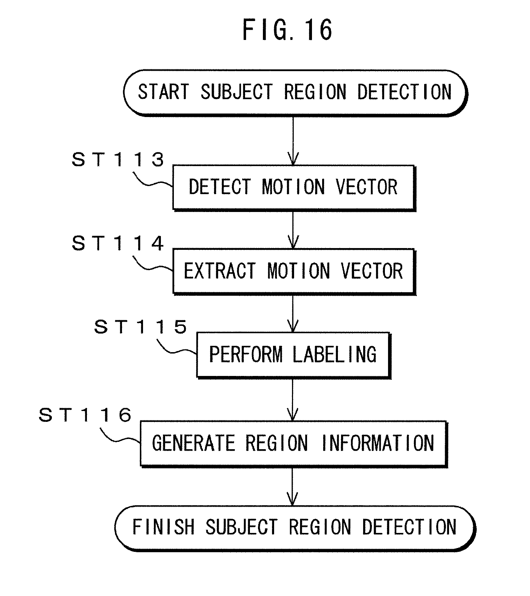

FIG. 16 shows a flowchart for showing other operations of subject image detection. At step ST113, the CPU 301 detects a motion vector. The PCU 301 detects the motion vector by performing, for example, block matching between the image signal SDin and the delayed image signal SDa which is delayed by one frame.

At step ST114, the CPU 301 extracts motion vectors. The CPU 301 extracts from the motion vectors detected at step ST113 the motion vectors, for example, the motion vectors with the second-largest through 15-th largest numbers of pixels, in a predetermined order range established when ranking those motion vectors in accordance with the number of pixels for each of the motion vectors and sets the pixels having those motion vectors as the pixels of a motion region.

Next, at step ST115, the CPU 301 performs labeling to impart a label number to the pixels of the motion region as described above and generates an image remaining only the pixels of the label number with the largest number of pixels. Next, at step ST116, the CPU 301 generates region information as described above, to generate the region information that indicates the subject region.

Referring back to FIG. 14, at step ST2, the CPU 301 generates a pixel value distribution. The CPU 301 extracts the pixels of a subject region indicated by the region information obtained at step ST1, to generate a pixel value distribution such as a sort waveform or histogram based on the pixel values of the extracted pixels.

At step ST3, the CPU 301 performs determination processing. In this determination processing, the CPU 301 reads a pixel value distribution registered in the database beforehand and generates determination information on whether or not the pixel value distribution generated at step ST2 is similar to the registered pixel value distribution thus read. For example, in the case of using a sort waveform as the pixel value distribution, the CPU 302 calculates, for example, a total sum of absolute difference values between sort information indicated in the registered pixel value distribution and a sort waveform based on the pixels of the subject region and sets a result of the calculation as determination information. Further, in the case of using a histogram as the pixel value distribution, the CVPU 302 calculates, for example, a ratio of an AND region of a histogram of the registered pixel distribution and a histogram based on the pixels of the subject region with respect to their OR region and then sets this ratio as the determination information.

At step ST4, the CPU 301 determines whether or not determination processing is completed with all of the registered pixel value distributions. In this case, if the determination information of the pixel value distribution based on the pixels of the subject region and that of all of the registered pixel value distributions are generated, the CPU 301 goes to step ST5. Further, if the determination information with all of the registered pixel value distributions is not generated, the CPU 301 returns to step ST3 to read a new registered pixel value distribution and generate the determination information.

At step ST5, the CPU 301 determines the subject image. The CPU 301 detects a registered pixel value distribution that is most similar to a pixel value distribution based on the pixels of the subject region from the determination information obtained by performing the processing of step ST3 and that of step ST4 and then determines an image corresponding to this registered pixel value distribution as a subject image that is most similar to the image of the subject region. For example, the CPU 301 determines a subject image that corresponds to such registered information that the total sum of absolute difference values may be reduced to "0" or minimized or such a registered pixel value distribution that the ratio of the AND region may be maximized as a subject image that is most similar to the image of the subject region.

Further, the CPU 301 may compare the determination information with a preset threshold value and, based on the result of this comparison, determine the most similar subject image. For example, the CPU 301 determines as the subject image an image that corresponds to such registered information that the total sum of absolute difference values may be smaller than the threshold value or an image that corresponds such registered information that the ratio of the AND region may be larger than the threshold value.

It is to be noted that the above embodiments may be carried out after performing noise cancellation, luminance adjustment, and other general processing to remove the disturbance factors on the input image. Further, if plural subject regions are extracted, the processing may be performed only on the largest one of them or performed also on a plurality of subjects because more than one subject is present.

Besides, the present invention may be changed variously without departing the gist of the present invention greatly.

It should be understood by those skilled in the art that various modifications, combinations, sub-combinations and alternations may occur depending on design requirements and other factors insofar as they are within the scope of the appended claims or the equivalents thereof.

**Claims**

1. An apparatus of determining a similar image, the apparatus comprising:

   a subject-region-detecting unit that detects a subject region from a received image;
   a pixel-value-distribution-generating unit that generates pixel value distribution of pixels included in the subject region detected by the subject-region-detecting unit; and
   a determination unit that determines whether or not an image relative to the subject region is similar to a previously registered subject image based on the pixel value distribution generated by the pixel-value-distribution-generating unit and a registered pixel value distribution of the previously registered subject image.

**2.** The apparatus of determining a similar image according to Claim 1, wherein the subject-region-detecting unit contains an outline-extracting section that extracts an outline of the subject from the received image, and
wherein the subject-region-detecting unit detects a region enclosed by a longest consecutive outline as the subject region.

**3.** The apparatus of determining a similar image according to Claim 2 wherein the outline-extracting section performs difference calculation on pixel values between a target pixel and an adjacent pixel for each pixel and compares a calculation result thereof with a threshold value, to extract the outline of the subject.

**4.** The apparatus of determining a similar image according to Claim 1, 2 or 3, wherein the subject-region-detecting unit contains a motion-vector-detecting section that detects a motion vector in the received image, and a motion-region-extracting section that extracts an image region relative to the motion vector that stays within a predetermined order range when ranking the motion vector in accordance with number of pixels for each motion vector, and
wherein the subject-region-detecting unit detects as the subject region a region enclosed by a consecutive motion region having a longest length thereof.

**5.** The apparatus of determining a similar image according to one of the claims 1 to 4, wherein the pixel-value-distribution-generating unit generates sort waveforms in which the pixel values of the pixels included in the subject region are sorted in an order of pixel values as the pixel value distribution.

**6.** The apparatus of determining a similar image according to Claim 5, wherein the determination unit determines whether or not the image relative to the subject region is similar to the previously registered subject image by using the sum of absolute difference values between the sort waveform generated as the pixel value distribution by the pixel-value-distribution-generating unit and a sort waveform relative to the registered pixel value distribution.

**7.** The apparatus of determining a similar image according to Claim 5 or 6, wherein the pixel-value-distribution-generating unit performs any one of thinning-out and interpolation on the sort waveform to make number of pixels in the sort waveform generated as the pixel value distribution by the pixel-value-distribution-generating unit equal to number of pixels of a sort waveform relative to the registered pixel value distribution.

**8.** The apparatus of determining a similar image according to Claim 5, 6 or 7, wherein the determination unit performs any one of thinning-out and interpolation on the sort waveform to make number of pixels in the sort waveform generated as the pixel value distribution by the pixel-value-distribution-generating unit equal to number of pixels of a sort waveform relative to the registered pixel value distribution.

**9.** The apparatus of determining a similar image according to one of the claims 1 to 8, wherein the pixel-value-distribution-generating unit generates as the pixel value distribution a histogram in which the pixels included in the subject region are distributed into classes each corresponding to a pixel value.

**10.** The apparatus of determining a similar image according to Claim 9, wherein the determination unit determines whether or not the image relative to the subject region is similar to the previously registered subject image by using a ratio of a logical product region of the histogram generated as the pixel value distribution by the pixel-value-distribution-generating unit and a histogram relative to the registered pixel value distribution with respect to a logical sum region of the histogram generated as the pixel value distribution by the pixel-value-distribution-generating unit and the histogram relative to the registered pixel value distribution.

**11.** The apparatus of determining a similar image according to Claim 10, wherein the pixel-value-distribution-generating unit corrects the histogram to make number of pixels in the histogram generated as the pixel value distribution by the pixel-value-distribution-generating unit equal to number of pixels of the histogram relative to the registered pixel value distribution.

**12.** The apparatus of determining a similar image according to Claim 10 or 11, wherein the determination unit corrects the histogram to make number of pixels in the histogram generated as the pixel value distribution by the pixel-value-distribution-generating unit equal to number of pixels of the histogram relative to the registered pixel value distribution.

**13.** A method of determining a similar image, the method comprising:

a subject-region-detecting step of detecting a subject region from a received image;

a pixel-value-distribution-generating step of generating pixel value distribution of pixels included in the subject region detected in the subject-region-detecting step; and

a determination step of determining whether or not an image relative to the subject region is similar to a previously registered subject image based on the pixel value distribution generated in the pixel-value-distribution-generating step and a registered pixel value distribution of the previously registered subject image.

14. A program product that allows a computer to execute a method of determining a similar image, the method comprising:

a subject-region-detecting step of detecting a subject region from a received image;

a pixel-value-distribution-generating step of generating pixel value distribution of pixels included in the subject region detected in the subject-region-detecting step; and

a determination step of determining whether or not an image relative to the subject region is similar to a previously registered subject image based on the pixel value distribution generated in the pixel-value-distribution-generating step and a registered pixel value distribution of the previously registered subject image.

15. A recording medium that records a program product that allows a computer to execute a method of determining a similar image, the method comprising:

a subject-region-detecting step of detecting a subject region from a received image;

a pixel-value-distribution-generating step of generating pixel value distribution of pixels included in the subject region detected in the subject-region-detecting step; and

a determination step of determining whether or not an image relative to the subject region is similar to a previously registered subject image based on the pixel value distribution generated in the pixel-value-distribution-generating step and a registered pixel value distribution of the previously registered subject image.

FIG. 1

11 (11a, 11b)         12                    13

SDin ───●──► ┌──────────────┐    ┌──────────────────┐    ┌──────────────┐
             │SUBJECT-REGION│    │  PIXEL-VALUE-    │    │ DETERMINATION│
             │ -DETECTING   │─SE►│  DISTRIBUTION-   │─JA►│    UNIT      │──► SDc
             │    UNIT      │    │GENERATING UNIT   │    │              │
             └──────────────┘    └──────────────────┘    └──────────────┘
        │                                 ▲
        └─────────────────────────────────┘
                                                    10

FIG. 2

        111                 115a                116

      ┌──────────┐      ┌──────────┐      ┌────────────────────┐
  ──► │ OUTLINE- │      │ LABELING │      │ REGION-INFORMATION │
SDin  │EXTRACTING│─SDdf►│ SECTION  │─SDla►│   -GENERATING      │─SE►
      │ SECTION  │      │          │      │     SECTION        │
      └──────────┘      └──────────┘      └────────────────────┘
                                                    11

13

FIG. 3A

FIG. 3B

FIG. 3C

FIG. 3D

FIG. 3E

「255」

「0」

LB1

「0」

LB2

LB3

LB4

LB5

LB1

「0」

「0」

「255」

# FIG. 4

SDin → MOTION-VECTOR-DETECTING SECTION `113` → SDmv → MOTION-REGION-EXTRACTING SECTION `114` → SDeg → LABELING SECTION `115b` → SDla → REGION-INFORMATION-GENERATING SECTION `116` → SE

DELAY SECTION `112` → SDa

11a

FIG. 5A

FIG. 5B

「255」

「0」

FIG. 5C

LB1

「0」

LB2

FIG. 5D

LB1

「0」

FIG. 5E

「0」

「255」

# FIG. 6

FIG. 7A

FIG. 7B

PIXEL VALUE

PIXEL ORDER

FIG. 7C

PIXEL VALUE

NUMBER OF PIXELS

FIG. 8A   PIXEL VALUE

NUMBER OF PIXELS

FIG. 8B   PIXEL VALUE

NUMBER OF PIXELS

FIG. 9A

PIXEL VALUE

FIG. 9B

NUMBER OF PIXELS

FIG. 9C

PIXEL VALUE

FIG. 9D

NUMBER OF PIXELS

PIXEL VALUE

FIG. 10A

NUMBER OF PIXELS    RCT

PIXEL VALUE

FIG. 10B

NUMBER OF PIXELS    RCT

PIXEL VALUE

FIG. 10C

NUMBER OF PIXELS    RCT

FIG. 11A

FIG. 11B

NUMBER OF PIXELS

PIXEL VALUE

FIG. 11C

PIXEL VALUE

NUMBER OF PIXELS

FIG. 12A

NUMBER OF PIXELS

PIXEL VALUE

FIG. 12B

NUMBER OF PIXELS

PIXEL VALUE

FIG. 12C

NUMBER OF PIXELS

PIXEL VALUE

# FIG. 13

301 302 303 304

| CPU | ROM | RAM | HDD |

305

320

INPUT/OUTPUT INTERFACE

311 312 313 314 315

| INPUT UNIT | RECORDING MEDIUM DRIVE | COMMUNICATION UNIT | IMAGE SIGNAL INPUT UNIT | OUTPUT UNIT |

SDc

SDin

SDc

# FIG. 14

START

ST1

DETECT SUBJECT REGION

ST2

GENERATE PIXEL VALUE DISTRIBUTION

ST3

PERFORM DETERMINATION PROCESSING

ST4

IS DETERMINATION PROCESSING WITH ALL REGISTERED PIXEL VALUE DISTRIBUTIONS COMPLETED ?

NO

YES

ST5

DETERMINE SUBJECT IMAGE

END

# FIG. 15

```
            ( START SUBJECT REGION DETECTION )
                           │
                           ▼
ST111 ┌─────────────────────────────────────────┐
      │      GENERATE DIFFERENTIAL IMAGE         │
      └─────────────────────────────────────────┘
                           │
                           ▼
ST115        ┌──────────────────────┐
             │   PERFORM LABELING    │
             └──────────────────────┘
                           │
                           ▼
ST116 ┌─────────────────────────────────────────┐
      │     GENERATE REGION INFORMATION          │
      └─────────────────────────────────────────┘
                           │
                           ▼
            ( FINISH SUBJECT REGION DETECTION )
```

# FIG. 16

```
        ( START SUBJECT REGION DETECTION )
                         │
                         ▼
ST113 ┌──────────────────────────────────┐
      │        DETECT MOTION VECTOR       │
      └──────────────────────────────────┘
                         │
                         ▼
ST114 ┌──────────────────────────────────┐
      │       EXTRACT MOTION VECTOR       │
      └──────────────────────────────────┘
                         │
                         ▼
ST115 ┌──────────────────────────────────┐
      │         PERFORM LABELING          │
      └──────────────────────────────────┘
                         │
                         ▼
ST116 ┌──────────────────────────────────┐
      │     GENERATE REGION INFORMATION   │
      └──────────────────────────────────┘
                         │
                         ▼
        ( FINISH SUBJECT REGION DETECTION )
```

**European Patent Office**

## EUROPEAN SEARCH REPORT

Application Number

EP 08 15 5070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/38356 A (MICROSOFT CORP [US]) 31 May 2001 (2001-05-31) | 1,5-15 | INV. G06K9/46 G06T5/00 |
| Y | * abstract * * page 13, last paragraph - page 14, paragraph 1 * * page 23, paragraph 2 - page 24, paragraph 2 * * figure 5 * | 2-4 | |
| Y | US 2006/023944 A1 (OISEL LIONEL [FR] ET AL) 2 February 2006 (2006-02-02) * abstract * * column 3, line 31 - line 52 * | 2,3 | |
| Y | KIM J B ET AL: "Efficient region-based motion segmentation for a video monitoring system" PATTERN RECOGNITION LETTERS, ELSEVIER, AMSTERDAM, NL, vol. 24, no. 1-3, 1 January 2003 (2003-01-01), pages 113-128, XP004391161 ISSN: 0167-8655 * abstract * * page 114, column 2, last paragraph - page 115, column 2, paragraph 1 * | 4 | |

TECHNICAL FIELDS SEARCHED (IPC)

G06K
G06T
G06F

-/--

The present search report has been drawn up for all claims

| Place of search | Date of completion of the search | Examiner |
|---|---|---|
| Munich | 16 July 2008 | Turina, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 08 15 5070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BELONGIE S ET AL: "Blobworld: image segmentation using expectation-maximization and its application to image querying" IEEE TRANSACTIONS ON PATTERN ANALYSIS AND MACHINEINTELLIGENCE, IEEE SERVICE CENTER, LOS ALAMITOS, CA, US, vol. 24, no. 8, 1 August 2002 (2002-08-01), pages 1026-1038, XP011094692 ISSN: 0162-8828 * abstract * * page 1026, column 2, paragraphs 2,3 * * page 1027, column 2, paragraph 4 * * page 1032, column 2, paragraphs 1,2 * ----- | 1,13-15 | |

TECHNICAL FIELDS
SEARCHED      (IPC)

The present search report has been drawn up for all claims

| Place of search | Date of completion of the search | Examiner |
|---|---|---|
| Munich | 16 July 2008 | Turina, Andreas |

EPO FORM 1503 03.82 (P04C01)

## ANNEX TO THE EUROPEAN SEARCH REPORT
## ON EUROPEAN PATENT APPLICATION NO.

EP 08 15 5070

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2008

| Patent document cited in search report | | Publication date | Patent family member(s) | | Publication date |
|---|---|---|---|---|---|
| WO 0138356 | A | 31-05-2001 | AU | 1790401 A | 04-06-2001 |
| | | | US | 6611622 B1 | 26-08-2003 |
| | | | US | 2003215134 A1 | 20-11-2003 |
| US 2006023944 | A1 | 02-02-2006 | AU | 2003288359 A1 | 19-04-2004 |
| | | | EP | 1543444 A2 | 22-06-2005 |
| | | | FR | 2845186 A1 | 02-04-2004 |
| | | | WO | 2004029833 A2 | 08-04-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007114305 A
- JP 2005327065 A
- JP 2006058959 A